# EUROPÄISCHE PATENTSCHRIFT

(11) **EP 3 735 136 B1**
(45) Veröffentlichungstag und Bekanntmachung des Hinweises auf die Patenterteilung: **26.11.2025**
(21) Anmeldenummer: 18826646.4
(22) Anmeldetag: 20.12.2018
(51) Int. Cl.: A23B 4/01, H05B 3/00, H05B 3/03, A23L 5/10

(54) **VERFAHREN ZUR BEHANDLUNG EINES LEBENSMITTELS MITTELS NICHT-KONVENTIONELLER, OHM`SCHER ERHITZUNG**
METHOD FOR TREATING A FOOD PRODUCT BY MEANS OF NON-CONVENTIONAL RESISTIVE HEATING
PROCÉDÉ DE TRAITEMENT D'UNE DENRÉE ALIMENTAIRE PAR CHAUFFAGE OHMIQUE NON CONVENTIONNEL

(30) Priorität: 04.01.2018 DE 102018100128; 02.05.2018 DE 102018110483
(43) Veröffentlichungstag der Anmeldung: 11.11.2020
(73) Patentinhaber: Kortschack, Fritz, 26125 Oldenburg (DE)
(72) Erfinder: EBERHARDT, Kevin, 91623 Sachsen bei Ansbach (DE); KORTSCHACK, Fritz, 26125 Oldenburg (DE)
(74) Vertreter: Meissner Bolte Partnerschaft mbB
(86) Internationale Anmeldenummer: PCT/EP2018/086035
(87) Internationale Veröffentlichungsnummer: WO 2019/134837

(56) Entgegenhaltungen:
- EP-A1- 2 175 693
- WO-A1-2018/091557
- DE-A1- 1 540 909
- JP-A- 2012 115 260
- US-A- 2 895 405
- GABRIEL PIETTE ET AL: "IS THERE A FUTURE FOR OH- MIC COOKING IN MEAT PROC- ESSING ?", 31 May 2001 (2001-05-31), XP055167115, Retrieved from the Internet <URL:http://cmsa-ascv.ca/documents/2001May-01Piettepgs8-10.pdf> [retrieved on 20150204]

## Beschreibung

Die Erfindung betrifft ein Verfahren zur Behandlung eines Lebensmittels mittels nicht-konventioneller, Ohm'scher Erhitzung, zur Erwärmung von in einer Umhüllung befindlichem Rohmaterial zur Fertigung von Lebensmitteln wie Brühwurst, Hot Dogs oder dergleichen Produkten, wobei das jeweilige Lebensmittel mit beabstandeten, elektrisch leitfähigen Elektroden in Verbindung gebracht wird und die Elektroden an einer steuerbaren oder regelbaren Stromquelle angeschlossen sind gemäß Oberbegriff des Anspruches 1.

Aus der DE 1 540 909 A ist eine Vorrichtung zur elektrischen Schnellerhitzung von Lebensmitteln vorbekannt, wobei die Erhitzung durch axialen Durchgang normalfrequenten Wechselstromes erfolgt. Der Wechselstrom wird an den Enden oder Stirnseiten des zu behandelnden langgestreckten Lebensmittels durch Kontakte zugeführt. Die diesbezügliche nicht-leitende oder schlecht leitende Hülle des Lebensmittels wird durchdrungen. Die eingesetzten Elektroden können an den Kontaktflächen spitzen- oder schneidenförmige Vorsprünge besitzen, so dass die vorerwähnte Hülle leichter durchstoßen werden kann.

Bei der Vorrichtung zum Erwärmen von Lebensmitteln nach DE 10 2015 206 385 A1 geht es bevorzugt um die Behandlung von umhüllten Waren, insbesondere Fleisch- und Wurstwaren. Mittels der vorbekannten Lehre soll ein schnelles Erwärmen des umhüllten Lebensmittels durch gleichmäßiges Aufbringen elektrischen Stromes, der innerhalb des Lebensmittels Wärme erzeugt, realisiert werden.

Diesbezüglich weist die Vorrichtung zumindest zwei beabstandete, achsparallele und gleichsinnig drehbare zylindrische Elektroden auf, die mit den Anschlüssen entgegengesetzter Polarität einer elektrischen Stromquelle kontaktiert sind und im elektrischen Kontakt mit der Hülle stehen, wobei die Elektroden an der Hülle rotieren. Die Hülle weist bevorzugt eine Längsachse auf, die parallel zu den Längsachsen der Elektroden angeordnet ist, so dass die zumindest zwei Elektroden achsparallel zur Hülle rotieren.

Die Stromquelle nach DE 10 2015 206 385 A1 stellt Wechselstrom mit einer Frequenz im Bereich von 2 kHz bis 300 MHz bereit.

US 2 895 405 A beschreibt ein Endverbrauchergerät zum Kochen von Wurstwaren, das einen einfachen und schnellen Kochvorgang ermöglichen soll, sicher zu bedienen ist und wenige Bauteile aufweist. Das manuell zu bedienende Gerät weist senkrecht stehende Spitzelektroden auf, die zum Aufspießen einer Wurst dienen, wobei die Elektroden im Bereich des üblichen Durchmessers eindringen.

Die gattungsbildende DE 10 2014 010 166 A1 betrifft ein Verfahren zur Behandlung eines Lebensmittels durch Erhitzung. Dabei kommt eine nichtkonventionelle, Ohm'sche Erhitzung zum Einsatz. Das Funktionsprinzip der Ohm'schen Erhitzung geht auf das direkte Durchleiten von Strom durch das Produkt zurück. Dabei übernimmt das Lebensmittel quasi die Funktion eines Widerstandes.

Bei dem Verfahren nach DE 10 2014 010 166 A1 erfolgt zunächst das Befüllen einer formstabilen oder durch weitere Mittel formstabilisierten Hülle aus nichtleitendem Material mit einem Füllmaterial. Hierbei kann es sich insbesondere um ein Brät oder einen ähnlichen Lebensmittel-Rohstoff handeln. Im Anschluss werden die Öffnungen der Hülle mit leitenden Flächen, insbesondere mit Platten oder Stopfen, verschlossen. Über die leitenden Flächen erfolgt ein Zuführen des elektrischen Stromes zum Zweck der Ohm'schen Erhitzung.

In einer Ausgestaltung der dortigen Lehre besteht die Möglichkeit, die Strombeaufschlagung des Behandlungsgutes in Intervallen durchzuführen. Demzufolge folgt einem Bestromungsintervall ein Ruheintervall zur Angleichung der Temperatur im Produkt. Die jeweilige Zeitdauer der Intervalle ist wählbar anhand der jeweiligen Produkteigenschaften, zum Beispiel der Wärmeleitfähigkeit bzw. der elektrischen Leitfähigkeit.

In einer Ausgestaltung nach DE 10 2014 010 166 A1 kann das Behandlungsgut innerhalb der Hülle durch leitende Begrenzungen, zum Beispiel Scheiben aus leitendem Material, in Abschnitte unterteilt werden. Diese leitfähigen Begrenzungen führen zu einem Homogenisieren des Stromflusses und damit einer Vergleichmäßigung der Ohm'schen Erwärmung. Ein derart erwärmtes Produkt kann aus der formstabilen Hülle leicht entnommen und in einfacher Weise in Scheiben geschnitten werden.

Rohwurstmasse, die auch im sehr kalten Zustand in entsprechende Kartuschen gefüllt wird, kann durch Verschlüsse und durch Druck dauerhaft weiter verdichtet werden.

Die erwähnte formstabile Hülle kann gleichzeitig als kontaminationsfreie Verpackung, insbesondere Transportverpackung, für das fertige Produkt genutzt werden.

Obwohl die vorbeschriebenen Verfahren bereits sehr gute Ergebnisse bei der Behandlung von Lebensmitteln durch Ohm'sche Erhitzung zeigen, besteht das Problem, dass insbesondere bei großflächigen Kontakten sich während des Erhitzungsvorganges Lufteinschlüsse aufbauen bzw. beim Erhitzen Gase freigesetzt werden, die eine Isolationsschicht unmittelbar vor der Kontaktfläche bilden, so dass die Erwärmung ungleichmäßig erfolgt, wobei es hierdurch zu Störungen im Produktionsablauf bei der Herstellung entsprechender Lebensmittel kommen kann. Dieser Effekt lässt sich zwar mit dem Gedanken des Erzeugens einer Relativbewegung zwischen dem Füllmaterial, das heißt dem zu behandelnden Lebensmittel und den leitenden Flächen, reduzieren, jedoch ist der Aufwand zum Erzeugen einer derartigen Relativbewegung erheblich.

Aus dem Vorgenannten ist es daher Aufgabe der Erfindung, ein weiterentwickeltes Verfahren zur Behandlung eines Lebensmittels mittels Ohm'scher Erhitzung anzugeben, dass die geschilderten Nachteile des Standes der Technik nicht mehr aufweist und für eine kontinuierliche, industrielle Produktion geeignet ist.

Die Lösung der Aufgabe der Erfindung erfolgt mit einem Verfahren gemäß der Lehre nach Patentanspruch 1, wobei die Unteransprüche mindestens zweckmäßige Ausgestaltungen und Weiterbildungen umfassen.

Das erfindungsgemäße Verfahren geht von einer an sich bekannten Ohm'schen Erhitzung aus und bezieht sich auf Lebensmittel, die sich insbesondere in einer isolierenden Kapselung oder Umhüllung befinden. Bei der Umhüllung kann es sich zum Beispiel um einen Darm handeln. Die isolierende Kapselung kann unterstützend einzelne Formschalen, Formschalengruppen, zylindrische Hüllen, Bänder oder andere Hüllenkonfigurationen mit beliebigem Querschnitt umfassen.

Bei den zu behandelnden Lebensmitteln handelt es sich insbesondere um Wurstwaren wie Brühwurst, Hot Dogs, Formfleisch oder dergleichen Produkte.

Für das jeweilige Verfahren sind die Elektroden jeweils als mindestens eine erste und eine zweite Elektrode bzw. Elektrodengruppe ausgebildet.

Die Elektroden weisen einen Abstand A_{EG} zueinander auf.

Bei Elektrodengruppen besitzt wiederum jede Gruppe eine Anzahl von Einzelelektroden ähnlich einem Nadelkamm oder einer Nadelbürste, wobei die benachbarten Einzelelektroden des Nadelkamms jeweils einen Abstand A_{EE} aufweisen.

Der Abstand A_{EG} ist dabei größer oder maximal gleich dem Abstand A_{EE}.

Die jeweiligen Elektroden dringen in die insbesondere isolierende Kapselung oder Umhüllung ein und durchstoßen das Lebensmittel derart, dass sich bezogen auf das Lebensmittel und die Kapselung oder Umhüllung Nadelkammein-, Andock- oder -austrittsstellen ergeben.

Die Einzelelektroden des Nadelkamms bzw. der Nadelkammelektrode sind im Wesentlichen parallel zueinander liegend ausgeführt. Jede Einzelelektrode kann eine Einstichzuspitzung aufweisen. Dies kann zum Beispiel ein entsprechender Anschliff sein. Es ist jedoch auch möglich, Elektroden mit abgerundeten oder abgeflachten Enden mittels eines Platzhalters z. B. angeschliffenes Röhrchen, in die Hülle und durch das Behandlungsgut bis zur gegenüberliegenden Hüllenwand einzubringen, wobei sichergestellt sein muss, dass die Enden der Elektroden plan abschließend auf der gegenüberliegenden Innenwand der Hülle anliegen.

Die Stromquelle wird erfindungsgemäß erst dann aktiviert, wenn alle oder die überwiegende Anzahl der Einzelelektroden ihre (Austrittsstellen-) Endposition erreicht haben, das heißt das Lebensmittel vollständig durchstochen wurde. Bei einer z.B. in einem flexiblen Darm befindlichen Wurstware werden die jeweiligen Elektrodengruppen bevorzugt im Zipfelbereich des Darmes eingestochen und es wird dort ein entsprechender Durchstich erzeugt. Mittels Ausübung einer Presskraft in Längsrichtung der Wurstware kann eine mindestens endseitige Verdichtung der Wurstware realisiert und eine unerwünschte Kappenbildung an den Darmenden vermieden werden.

Nach dem Entfernen der jeweiligen Elektrodengruppe aus dem behandelten Lebensmittel durch Zug- oder Druckkrafteinwirkung können die verbleibenden Ein- und Durchtrittsstellen am Darm bzw. der Umhüllung verschlossen werden.

Dieses Verschließen kann zum Beispiel durch Besprühen mit einem lebensmittelverträglichen Flüssigkunststoff, durch Verkleben, Bestreichen oder durch das Aufbringen einer überzugsartigen Teil-Umhüllung erfolgen.

Zum Zweck des Verschließens sind rückstreckende, selbstheilende Folienmaterialien besonders geeignet. Hierbei kann bereits das Material des Kunstdarmes aus einem derartigen selbstheilenden Folienmaterial bestehen oder in den Bereichen, in welchen die Durchstoßung stattfinden soll, selbstheilende Eigenschaften besitzen.

Die eingangs erwähnte Stromquelle zur Erzeugung elektrischer Energie stellt hochfrequente Energie bereit. Durch die Steuerbarkeit der Energiequelle ist sichergestellt, dass während der Ohm'schen Erhitzung keine unerwünschten Hot-Spots im Lebensmittel entstehen, wobei auch eine impulsartige Strombeaufschlagung mit Kontrolle des Einhaltens einer maximalen Stromstärke möglich ist.

Nach der Ohm'scher Erhitzung besteht zum Zweck der weiteren Dekontamination die Möglichkeit, das entsprechende Produkt in konventioneller Weise nachzuerhitzen, zum Beispiel kann hier ein Wasserbad vorgenommen werden oder eine Behandlung mit Heißdampf erfolgen. Ebenso kann ergänzend eine Behandlung mittels infraroter Strahlung vorgenommen werden.

Bei einer Weiterbildung der Erfindung sind die Einzelelektroden um ihre Achse drehbar bzw. beweglich ausgeführt. Während des Durchstoßens können die Einzelelektroden eine Rotationsbewegung ausführen, wobei während des Entfernens der Einzelelektroden eine diesbezüglich richtungsgeänderte Rotationsbewegung stattfindet. Durch dieses Durchstoßen mittels Rotationsbewegung wird die Einstich- bzw. Durchstichstelle bezogen auf die Umhüllung minimal invasiv ausgeführt, so dass der Aufwand beim Wiederverschließen reduziert ist.

In Weiterbildung der Erfindung können die Einzelelektroden als Hohlelektroden realisiert werden. Der Elektrodenhohlraum kann dann der Aufnahme eines Wärmemittels oder Kühlmittels dienen oder einen Erhitzungskern bzw. Kühlkern hoher thermischer Leitfähigkeit besitzen. Mindestens eine der Elektroden kann einen integrierten Temperatursensor aufweisen.

Es sei an dieser Stelle angemerkt, dass das Einbringen der Elektroden bezogen auf ein langgestrecktes Behandlungsgut, zum Beispiel einem Hot Dog, im Wesentlichen schräg bis rechtwinkelig zur Längsachse des Behandlungsgutes erfolgt.

In Weiterbildung der Erfindung können die Einzelelektroden derart eingebracht werden, dass sich mindestens bei einer Elektrodengruppe eine sogenannte Gitterelektrode bildet. Dies bedeutet, dass ein erster Elektrodenkamm in das Lebensmittel nebst Umhüllung eingestochen wird. Ein zweiter Elektrodenkamm wird dann an derselben Stelle, jedoch winkelversetzt, ebenfalls eingestochen. Wird dann in einer gedachten Blickrichtung senkrecht zur Einstichrichtung das entstandene Gebilde analysiert, stellt sich dieses als Gitterelektrode dar.

Die isolierende Kapselung kann in einer Weiterbildung der Erfindung aus (Halb-) Schalen bestehen, welche das Lebensmittel aufnehmen, wobei die (Halb-) Schalen vor dem Eindringen der Elektroden bezogen auf das Lebensmittel formgebend aufeinander zubewegt werden. Durch dieses Aufeinanderzubewegen ist das Lebensmittel form- und verdichtbar. Es ist nicht erforderlich, dass das Lebensmittel in einer Umhüllung den Schalen zugeführt wird, sondern auch als Masse kann das Gut in den Schalen geformt und verdichtet werden, bevor die Erwärmung mittels der Ohm'schen Erhitzung über die (Durch-) Stichelektroden erfolgt. Eventuelle Lufteinschlüsse können entfernt werden, wozu insbesondere die an den gegenüberliegenden Enden der Halbschalen befindlichen Öffnungen zum Durchstechen nutzbar sind. Die Schalen können als Kette oder als Bestandteil eines kontinuierlichen Fertigungstransportbandes oder -Matte angeordnet sein. Nach der Behandlung mittels der Ohm'schen Erhitzung werden die Schalen wieder auseinandergefahren und die erhitzten und geformten Lebensmittel zur eventuellen Weiterbehandlung entnommen.

In Ausgestaltung der Erfindung besteht die Möglichkeit, das Durchdringen oder Durchstoßen des Lebensmittels bzw. der Umhüllung mittels Nadeln ultraschallunterstützt vorzunehmen.

Die erfindungsgemäße Lehre besteht weiterhin in dem Gedanken, auf eine kontinuierliche bzw. Linienfertigung abzustellen.

Das Behandlungsgut selbst wird einer Einrichtung zugeführt, welche aus zwei beabstandeten Transportbändern besteht.

Im Abstandsraum werden die noch unbehandelten, evtl. im Darm befindlichen Rohmaterialien aufgenommen. Mitnehmer, die sich von mindestens einem Transportband in Richtung Abstandsraum zwischen den Transportbändern erstrecken, bilden eine Trennung zwischen den einzelnen Portionen (Würsten) und ermöglichen einen sicheren Warentransport über die Länge der Transportbänder. Die Elektroden dringen in die jeweilige Hülle ein und durchdringen das Behandlungsgut, so dass über den Zeitraum des Zurücklegens des Transportweges die gewünschte Ohm'sche Erwärmung stattfinden kann. Mit Hilfe einer Steuerung der Transportgeschwindigkeit kann die Verweil- und damit die Behandlungsdauer vorgegeben werden.

Die Mitnehmer können auch entsprechend einer definierten Kontur Formstücke zur Formgebung des Behandlungsgutes sein und entsprechend ausgebildet werden.

Eine weitere kontinuierliche Behandlungsmethode kann dergestalt ausgeführt werden, dass das Behandlungsgut in einer vorgegebenen Breite zwischen nicht leitenden mitlaufenden evtl. angemuldeten Ober- bzw. Unterbänder gespritzt wird. Als Querteiler können Formstücke - zum Ausformen der Produktenden - mit später erläuterten Produkteigenschaften verwendet werden. Das Behandlungsgut bildet zwischen den Bändern eine homogene Fläche, die lediglich durch die quer liegenden Formstücke unterbrochen bzw. in der Länge begrenzt wird. Im weiteren Verlauf der Fortbewegung des Bandes werden nicht leitende Begrenzungswände formschlüssig mit den Formstücken eingebracht - durch die Bänder werden dünne Trennwände zwischen das Ober- und Unterband dergestalt aufgebracht, dass in dem jeweiligen Zwischenraum zwischen linker und rechter Trennwand und den begrenzenden Formstücken ein längliches Produktgut liegt. Der gewünschte, aufzubringende Druck kann durch ein Zusammenfahren der Ober- und Unterbänder erzeugt werden. Ausgehend von der Mitte der Formstücke kann über Elektroden bei das Behandlungsgut mittels Ohm'scher Erhitzung in extrem kurzer Zeit auf die gewünschte Temperatur gebracht werden.

Zwischen den erwähnten mitlaufenden Ober- bzw. Unterbändern und dem Behandlungsgut kann eine wiederverwendbare Folie, zum Beispiel aus Silikonmaterial oder eine mitlaufende Einmalfolie eingesetzt werden. Neben quasi flexiblen Ober- bzw. Unterbändern können auch feste Formen zum Einsatz gelangen.

Ungeachtet der verfahrensgemäßen Vorteile können Inhomogenitäten bei der Erhitzung des Behandlungsgutes zur Bildung von lokalen hohen bzw. lokalen niedrigen Temperaturen (Hot Spots, Cold Spots) führen. Beim Ohm'schen Erhitzen kommt es aufgrund unterschiedlicher elektrischer Leitfähigkeiten einzelner Produktabschnitte bzw. aufgrund einer ungleichmäßigen Verteilung des elektrischen Feldes zu Inhomogenitäten mit den vorerwähnten Hot Spots oder Cold Spots. Besonders disperse Systeme mit wässrigen oder ölhaltigen oder partikulären Fraktionen weisen Unterschiede in der Leitfähigkeit auf, die zu Unterschieden in der Temperaturerhöhung der jeweiligen Phase führen.

Um diesen Problemen zu begegnen, wird erfindungsgemäß vorgeschlagen, den Vorgang des Erhitzens in Abschnitte oder zeitliche Blöcke aufzuteilen, damit sich möglicherweise gebildete Cold Spots oder Hot Spots angleichen können. So ist es möglich, eine Impulserwärmung auf beispielsweise bis zu 50°C des Behandlungsgutes vorzunehmen. Danach wird eine Unterbrechung der Bestromung vorgenommen, so dass das Eiweißnetz festere Strukturen bilden kann. Im nächsten Schritt erfolgt eine Erwärmung auf ca. 60°C. Im Rahmen einer erneuten Behandlungspause erlangt das Eiweißnetz eine höhere Stabilität. Im Anschluss erfolgt dann eine weitere Wärmebehandlung bis auf die gewünschte Endtemperatur. Durch das Durchlöchern bzw. Zerstören von Zellmembranen beim Ohm'schen Erhitzen ergibt sich eine Verbindung intrazellulärer Flüssigkeit mit extrazellulären Flüssigkeiten. Hieraus ergibt sich eine höhere Wasserbindefähigkeit mit der Folge eines geringeren Geleeabsatzes. Hierdurch wiederum reduziert sich die Überlebensrate von Mikroorganismen aufgrund der Schädigung der Zellmembranen, was vorteilhaft für die Haltbarkeit des so behandelten Lebensmittels ist.

Ein weiterer Vorteil der Unterbrechung der Erwärmung bei einer relativ geringen Temperatur wie vorstehend erläutert ist der Umstand, dass das im Behandlungsgut, zum Beispiel einem Brät, vorhandene Gas, vor allem unter einem Gegendruck, sich bei ca. 50°C noch nicht so stark ausdehnt, dass die sich langsam verfestigende Eiweißmatrix zerrissen wird. Während der Behandlungspausen kann sich wie bereits dargelegt, das Eiweißnetz, begünstigt durch die erreichte Temperatur, weiter verfestigen, das heißt koagulieren. Während der sich anschließenden weiteren Temperaturbehandlung wird eingeschlossenes Gas in seiner ursprünglichen Position fixiert gehalten. Bei einer zu schnellen Erwärmung hingegen kann das eingeschlossene Gas explosionsartig expandieren und/oder sich mit anderen Gasen verbinden, bevor sich die Eiweißmatrix ausreichend stark verfestigt hat. Hierdurch entstehen größere Lufteinschlüsse mit entsprechenden Nachteilen auf das Behandlungsgut.

Auch wird der Trocknungsgrad im Bereich von Randzonen des Behandlungsgutes durch die stufenweise Behandlung reduziert.

Falls es bei der Behandlung des Gutes zu einem nicht ausreichenden Rückschrumpfen eingesetzter Därme als Umhüllungen kommt, besteht die Möglichkeit, den noch nicht behandelten jedoch befüllten Darm zwischen zwei oder mehreren Halb- bzw. Viertelschalen, die Bestandteile des jeweiligen Transportbandes sind, einzuspannen. Die Enden der Halb- oder Viertelschalen weisen dann Löcher auf, durch welche die Kammelektroden oder Durchstichelektroden einführbar sind. Ein zusätzlicher Stopfen mit entsprechend ausgeführten Ausnehmungen, die in ihrer Endstellung exakt mit den Einstichöffnungen in den Halbschalen übereinstimmen, ist in der Lage, den Druck auf das Behandlungsgut zu erhöhen, um möglicherweise vorhandene Hohlräume zu reduzieren. Nach Beendigung der erfindungsgemäßen Ohm'schen Erhitzung ist dann das Brät soweit verfestigt, dass nach dem Öffnen der Halb- oder Viertelschalen das erhitzte Produkt entnommen und in bekannter Weise nachbehandelbar ist. Hierdurch ist sichergestellt, dass auch sehr preiswerte Kunstdärme zur Umhüllung Verwendung finden können. Wenn Elektroden angewendet werden, die in der Lage sind, einen integrierten Temperatursensor aufzunehmen, kann während des Erhitzungsprozesses die Erwärmung bestimmt, die Kerntemperatur ermittelt und selbige als Regelgröße herangezogen werden.

Ganz grundsätzlich ist die erfindungsgemäße Lösung auch zur Behandlung von Rohbräten in Kartuschen nutzbar, wenn die Möglichkeit des Einbringens der erfindungsgemäßen Elektroden geschaffen ist.

Zum Gestalten von Enden oder Kappen, können vor die Elektroden widerstandseingestellte Flüssigkeiten, gallertartige Massen oder Stoffe (Puffermaterial) mit diesen Eigenschaften z. B. als Formstücke positioniert werden. Zwischen dem zu erwärmenden Behandlungsgut und dem widerstandseingestellten Puffermaterial wird eine wasser- und stromdurchlässige Form bzw. Membrane eingebracht, die dafür sorgt, dass die Produktenden die gewünschte Form annehmen. Diese Vorrichtung ermöglicht, dass die Bestromung des Behandlungsgutes auch an Ausbuchtungen gleichmäßig erfolgt und die gewünschten Geometrien realisiert werden.

Vornehmlich zur Fertigung von Produkten mit kleinem Kaliber wie z. B. Würstchen, Bratwurst etc., ist es wünschenswert, eine kontinuierliche Fertigung zu realisieren. Das kann dadurch erreicht werden, dass innerhalb geformter Bänder oder Rohre, über Mitnehmer, die auch gleichzeitig als Kontakte stromdurchlässiger Formen bzw. Membranen fungieren können, die Wärmebehandlung mittels der Ohm'schen Erhitzung erfolgt. Erfindungsgemäß ist es auch möglich, vor und hinter den jeweiligen Mitnehmern, zwischen der "linken" oder der "rechten" Membrane in das Puffermaterial oder die stromdurchlässige Form über Einstichelektroden die Ohm'sche Erhitzung vorzunehmen. Zur Erzielung gewünschter Kappen-Geometrien weisen die Formen bzw. das Puffermaterial zwischen der "linken" und "rechten" Membrane einen elektrischen Widerstand auf, der eine parallele Bestromung des Behandlungsgutes trotz "Kappenbildung" ermöglicht.

Die Abstände der Mitnehmer und die Durchmesser der geformten Bänder bzw. Rohre sind den jeweiligen Anforderungen an die Produktgröße anzupassen und dienen auch der Längenportionierung.

Die geformten Bänder bzw. Rohre können zur Verhinderung der Wärmeabstrahlung durch die Behandlungsmasse von außen erwärmt und/oder thermisch isolierend ausgeführt werden. Die Mitnehmer in den Rohren können über innen, aber auch außen liegende Schleppvorrichtungen bewegt werden.

Das Material für die Elektroden bzw. Elektrodengruppen hat den einschlägigen Vorschriften der Lebensmitteltechnologie zu entsprechen und sollte leicht zu reinigen sein. Zur Vermeidung von Kontaminationen besteht die Möglichkeit, die Elektroden mit einer antibakteriellen Beschichtung zu versehen. Hier kann es sich beispielsweise um eine Beschichtung handeln, welche Silberionen aufweist bzw. Silberionen freisetzt.

Alternativ besteht die Möglichkeit, die Elektroden mindestens teilweise aus einem Kunststoffmaterial zu fertigen, wobei das Kunststoffmaterial eine einstellbare elektrische Leitfähigkeit besitzt. Hierdurch ist die Verteilung des Stromflusses über die gedachte Ebene, welche von den einzelnen Elektroden aufgespannt wird, vorgebbar. Eine Folge hiervon ist, eine gleichmäßige, verbesserte Erwärmung, insbesondere in den Randbereichen eines wurstförmigen Behandlungsgutes.

Neben den erwähnten Nadelkammelektroden können auch Einzelelektroden zur Anwendung kommen. Die Auswahl und der Einsatz der Elektroden erfolgt unter Berücksichtigung der konkreten Abmessungen des Behandlungsgutes.

Beispielsweise können im Bereich Würstchen und Hot Dogs bevorzugt Einzelelektroden eingesetzt werden.

Bei einem kontinuierlichen Fertigungsprozess kann auch die Verarbeitung von nicht von einem Darm umhüllten Lebensmitteln vorgenommen werden. Die erwähnten Bänder oder Rohre umgeben das Behandlungsgut während des Behandlungsprozesses, so dass ein Darm nicht mehr nötig ist. Es sei an dieser Stelle erwähnt, dass das Band selbst beheizt werden oder mit Flüssigrauch oder sonstigen geschmacksbeeinflussenden Mitteln benetzt oder besprüht werden kann, um eine Übertragung dieser Komponenten auf das Behandlungsgut zu erreichen.

Im Rahmen umfangreicher Experimente hat sich darüber hinaus gezeigt, dass maßgeblich für den Erfolg einer gleichmäßigen Erhitzung und Eiweißdenaturierung das Vorhandensein elektrischer Energie in Form von Wechselstrom mit höheren Frequenzen ist.

Bei der Ohm'schen Erwärmung mittels hochfrequenten Wechselstrom erfahren die unterschiedlichen Inhaltsstoffe des zu behandelnden Lebensmittels eine voneinander abweichende Schwingungsanregung. Neben der klassischen Widerstandserwärmung wird erfindungsgemäß durch hochfrequente Schwingungen eine Partikelanregung im Behandlungsgut erreicht. Die Folge ist, dass zwischen den Inhaltsstoffen und Partikeln zusätzlich Reibungswärme entsteht, die die Gesamterwärmung des Behandlungsgutes verbessert. Durch hochfrequente Schwingungen im Bereich von im Wesentlichen 5 - 50 MHz kommt es zu Relativbewegungen der Partikel im Füllmaterial mit dem vorbeschriebenen Effekt der zusätzlichen Erwärmung, was in dieser Form bisher nicht bekannt war und zumindest nicht für die hier relevanten Verfahren zur Behandlung von Lebensmitteln zur Anwendung gekommen ist.

Die Wirkung der Ohm'schen Erhitzung zur gleichmäßigen und schnellen Erwärmung von Lebensmittelprodukten beruht auf Basis der erfindungsgemäßen Erkenntnisse darauf, dass die leitfähigen Inhaltsstoffe durch die sich permanent ändernden Frequenzen des Wechselstromes in eine Eigenschwingung gelangen. Diese Relativbewegungen führen zu einer Erwärmung des Behandlungsgutes.

Versuche mit 50 Hz Wechselstrom haben ergeben, dass die durchaus feststellbare, jedoch sehr langsam erfolgende Erwärmung auf die Widerstandserwärmung des Behandlungsgutes zurückzuführen ist.

Zur Beschleunigung des Erhitzungsvorganges kann die Frequenz des durch das Produkt geleiteten Wechselstromes erhöht werden. Versuche haben gezeigt, dass bis zu im Wesentlichen 16 kHz Gasbildungen an den Elektroden zu beobachten sind. Ab im Wesentlichen 17 kHz ist eine solche Gasbildung nicht mehr zu beobachten.

Produkte, die mittels der Ohm'schen Erhitzung in einer offenen Umhüllung erwärmt werden, können auch mit Frequenzen von unter 17 kHz beaufschlagt werden, da sich in diesem Falle das entwickelnde Gas verflüchtigt. Nach längerem Gebrauch der Elektroden sind allerdings an diesen Alterungsspuren festzustellen.

Komplett geschlossene Umhüllungen können problemlos nur mit Frequenzen von im Wesentlichen 17 kHz und mehr erfolgreich behandelt werden.

Die erwähnte Gasbildung tritt nicht schlagartig auf, sondern entwickelt sich im Laufe des Behandlungszeitraumes.

Ziel der Behandlung von Produkten mittels Ohm'scher Erhitzung unter Verwendung von hochfrequentem Wechselstrom ist erfindungsgemäß eine sehr schnelle, gleichmäßige und qualitätssteigernde Behandlung.

Als Beispiel kann hier die Erwärmung von Stangen für die Brühwurstproduktion genannt werden.

Bei einem Durchmesser von ca. 10 cm und einer Länge von etwa 60 cm wird ein derartiges Produkt zur Zeit im Kochschrank oder im offenen Wasserbad über einen Zeitraum von gut einer Stunde erwärmt. Durch die erfindungsgemäße Ohm'sche Erhitzung mit hochfrequentem Wechselstrom, ist eine Erwärmung in etwa ca. 5 Minuten eingetreten.

Das Verfahren des Ohm'schen Erhitzens kann unter Rückgriff auf die eingesetzten Durchstichelektroden auch bei in Kartuschen eingefüllten Behandlungsgut Verwendung finden, wenn die entsprechenden Elektroden durch vorgegebene Öffnungen in der Kartusche eingebracht werden. Durchstechelektroden können in diesem Falle in Führungsmulden der Verschlüsse eingebettet werden, so dass der Anteil des Behandlungsgutes, der möglicherweise nicht ausreichend erwärmt wird, gering bleibt.

Bei dem erläuterten Verfahren geht es primär um die Behandlung eines Lebensmittels im eigentlichen Herstellungs- bzw. Bearbeitungsprozess.

Das Prinzip der Durchstechelektroden lässt sich jedoch auch grundsätzlich für das Erwärmen sämtlicher pastöser Lebensmittel aber auch von bereits zubereiteten Suppen oder Fleisch als quasi festen Stoff anwenden. In einem solchen Fall ist es zweckmäßig, dass die Elektroden keine Feldstärke konzentrierenden Spitzen aufweisen. Vorteilhaft könnte hier eine am Ende der Elektrode angeformte oder ausgebildete Kugel sein. Die Elektroden können in diesem Falle zum Beispiel an einem Band oder einer Kette hängend, quasi im Durchlauf das Behandlungsgut erwärmen. Die Stromzuführung zu den Elektroden kann in diesem Falle über die Elektroden aufnehmenden Ketten oder Bänder realisiert werden.

Die Erfindung soll nachstehend anhand eines Ausführungsbeispiels sowie unter Zuhilfenahme von Figuren näher erläutert werden.

Hierbei zeigen:
- Fig. 1: eine Seitenansicht einer erfindungsgemäßen Vorrichtung zur Aufnahme einer Wurstware bei kontinuierlicher Fertigung;
- Fig. 2 und 5: eine Darstellung ähnlich derjenigen nach Fig. 1, jedoch mit bereits aufgenommener, zwischen den Transportbändern befindlicher Wurstware; und
- Fig. 3 und 4: Detaildarstellungen beispielhafter Nadelelektroden und Mitnehmer.

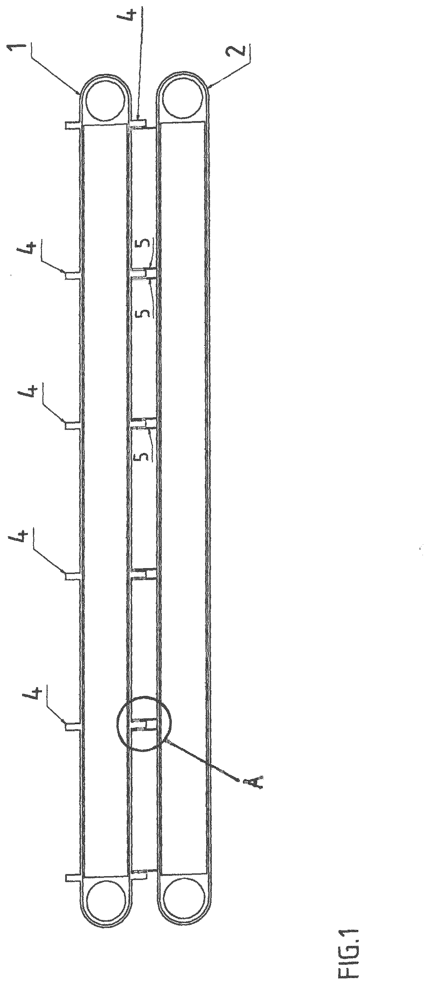

Die Darstellung gemäß Figur 1 zeigt eine Seitenansicht der erfindungsgemäßen Vorrichtung zur kontinuierlichen Fertigung und Ohm'scher Behandlung von Wurstwaren.

Dabei wird von zwei rollengeführten Transportbändern 1; 2 ausgegangen, die zwischen sich einen Abstandsraum besitzen.

Der Abstandsraum dient der Aufnahme der Wurstware 3, das heißt des Behandlungsgutes.

Im gezeigten Beispiel ist das obere Transportband 1 mit einer Vielzahl von Mitnehmern 4 versehen.

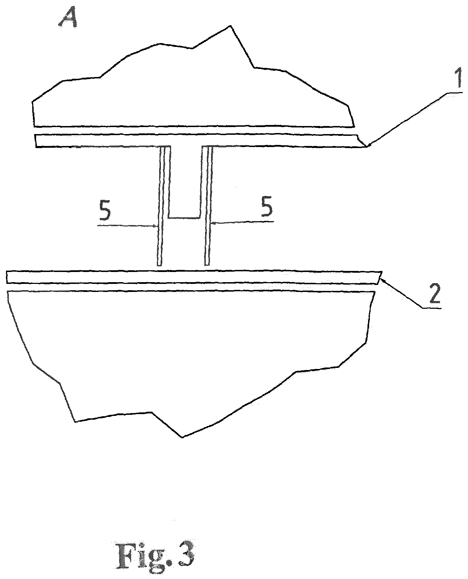

Weiterhin sind die erfindungsgemäßen Nadelelektroden 5 erkennbar (siehe auch Figur 3, Detail A).

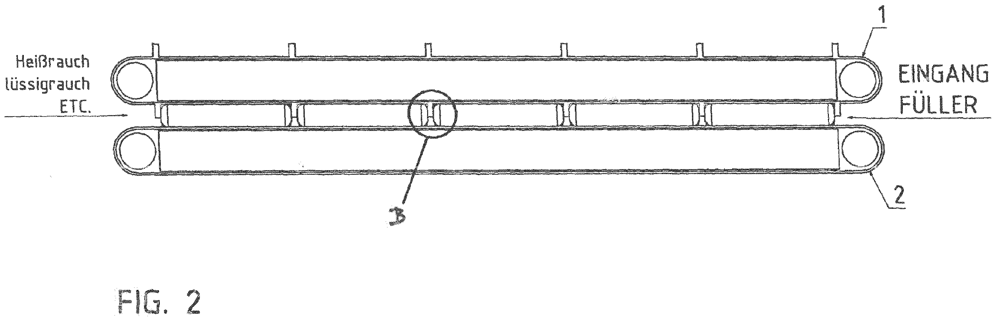

Die Figur 2 zeigt in Seitenansicht eine Ausführungsform, ähnlich derjenigen nach Figur 1, jedoch mit bereits aufgenommenen, durch Ohm'sche Erhitzung zu behandelnden Würsten, die eingangsseitig von einem Füller bereitgestellt werden.

Ausgangsseitig kann eine Behandlung mit Heißrauch, Flüssigrauch oder ähnlichen Mitteln erfolgen.

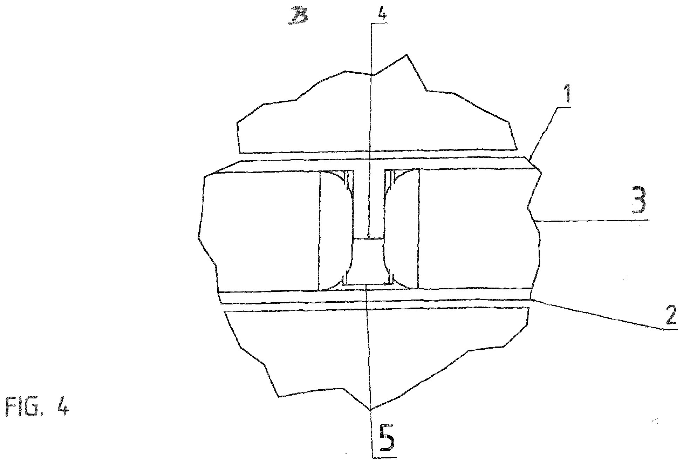

Wie anhand der Detaildarstellung B, das heißt der Figur 4, nachvollziehbar ist, durchstechen die Nadelelektroden 5 die Wursthülle, das heißt den Darm des zu behandelnden Gutes 3 in dessen Endkappenbereichen, so dass dann über die Zeitdauer des Verweilens der Wurstware innerhalb der Behandlungsvorrichtung die gewünschte Ohm'sche Erhitzung vorgenommen werden kann.

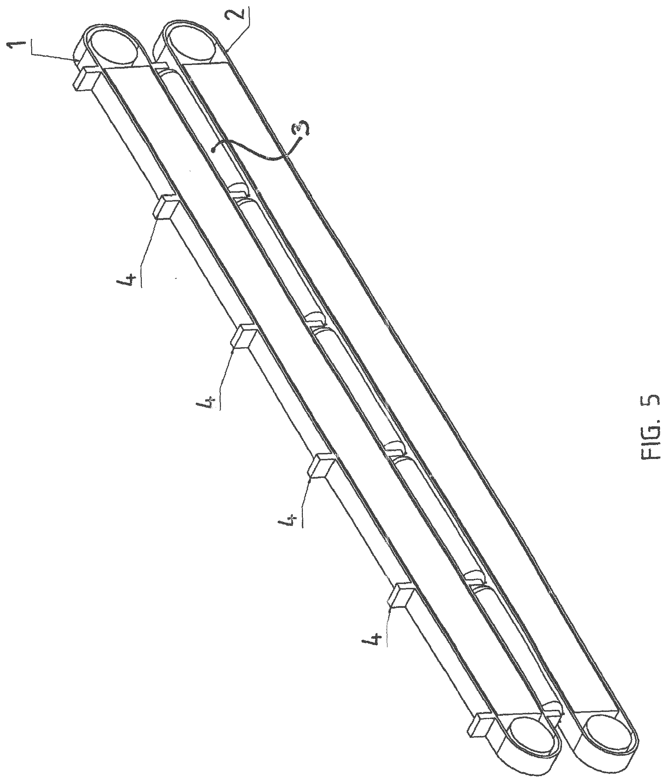

Die perspektivische Darstellung nach Figur 5 verdeutlicht noch einmal den Behandlungsvorgang mit den in der kontinuierlichen Behandlungseinrichtung aufgenommenen Wurstwaren.

Es liegt im Sinne der Erfindung, dass eine Vielzahl von Einzelbändern benachbart nebeneinanderliegend kombiniert werden können, um den Produktdurchsatz zu erhöhen.

Auch sind Bänder größerer Breite denkbar, welche jeweils mehrere parallel nebeneinanderliegende Waren aufnehmen, wobei dann die Zahl der Nadelelektroden bzw. Nadelkammelektroden entsprechend anzupassen ist, was jedoch im üblichen konstruktiven Ermessen des Fachmannes liegt.

Das Durchstechen vollzieht sich wie in der Fig. 4 illustriert derart, dass die Spitzen der Nadelkammelektroden 5 aus den zu behandelnden Lebensmitteln, das heißt der z.B. Wurstware 3, wieder austreten. Es findet also im Vergleich zu Lösungen des Standes der Technik bevorzugt nicht nur ein Einstechen, sondern ein Durchstechen bezogen auf das Produkt statt.

Beim gezeigten Beispiel werden die Nadelelektroden 5 der jeweiligen Elektrodengruppen im Wesentlichen senkrecht zur Längsachse des zu behandelnden Produktes 3 durch dieses hindurchgestochen. Diese Art des Durchstiches hat sich als besonders vorteilhaft gezeigt. Selbstverständlich liegt es im Sinne der Erfindung, von der senkrechten Richtung des Durchstoßens auch abzuweichen.

Der Vorteil der erfindungsgemäß eingesetzten Elektrodengruppen mit Nadelkammelektroden liegt darin, dass im Vergleich zu flächigen Elektroden keine störenden isolierenden Zwischenräume, zum Beispiel durch Gasbildung oder Gasablagerungen, entstehen können. Die Folge ist ein besonders gleichmäßiges und schnelleres Erhitzen des Behandlungsgutes ohne unerwünschte Hot-Spots.

Die Anzahl der Nadelkammelektroden des entsprechenden Nadelkamms kann beispielsweise im Bereich von fünf bis fünfzehn liegen und auf den Durchmesser des Behandlungsgutes angepasst bzw. abgestimmt werden.

## Patentansprüche

1. Verfahren zur Behandlung eines Lebensmittels mittels nicht-konventioneller, Ohm'scher Erhitzung, zur Erwärmung von in einer Umhüllung, z. B. einem Darm befindlichem Rohmaterial zur Fertigung von Lebensmitteln wie Brühwurst, Hot Dogs oder dergleichen Lebensmittelprodukten als langgestrecktes Behandlungsgut, wobei das jeweilige Lebensmittel mit beabstandeten, elektrisch leitfähigen Elektroden in Verbindung gebracht wird und die Elektroden an einer steuerbaren oder regelbaren hochfrequenten Wechselstromquelle angeschlossen sind,
**dadurch gekennzeichnet, dass**
die Elektroden jeweils aus einer ersten und einer zweiten Elektrode bestehen, wobei die Elektroden einen auf das Behandlungsgut (3) bezogenen Abstand (A_{EG}) zueinander aufweisen, wobei die jeweilige Elektrode die isolierende Kapselung oder die Umhüllung durchdringend und das Behandlungsgut (3) durchstoßend angeordnet oder durchstoßend bewegt wird sowie bei einem in einem flexiblen Darm oder einer flexiblen Umhüllung befindlichen Behandlungsgut (3) die jeweilige Elektrode im Zipfelbereich des Darmes oder der Umhüllung eingestochen und ein Durchstich erzeugt wird, derart, dass die Elektroden aus dem Behandlungsgut (3) wieder austreten und sich Ein- und Austrittsstellen ergeben, wobei das Einbringen der Elektroden bezogen auf das langgestreckte Behandlungsgut im Wesentlichen schräg bis rechtwinkelig zur Längsachse des Behandlungsgutes erfolgt, wobei hierfür das Behandlungsgut (3) im Abstandsraum zwischen zwei Transportbändern (1; 2) aufgenommen wird, wobei Mitnehmer, die sich von mindestens einem Transportband in Richtung Abstandsraum zwischen den Transportbändern erstrecken, eine Trennung zwischen den einzelnen Behandlungsguten bilden und einen sicheren Warentransport über die Länge der Transportbänder ermöglichen, wobei über den Zeitraum des Zurücklegens des Transportweges die gewünschte Ohm'sche Erwärmung stattfindet, wobei sich die Elektroden (5) von mindestens einem der Transportbänder (1) in Richtung des gegenüberliegenden Transportbandes (2) erstrecken.

2. Verfahren nach Anspruch 1,
**dadurch gekennzeichnet, dass**
die Elektroden jeweils als Vielzahl einer ersten und einer zweiten Elektrodengruppe ausgebildet sind, wobei die Elektrodengruppen einen auf das Behandlungsgut (3) bezogenen Abstand (A_{EG}) zueinander aufweisen,
jede Elektrodengruppe eine Anzahl von Einzelelektroden (5) ähnlich einem Nadelkamm besitzt, wobei die benachbarten Einzelelektroden (5) des Nadelkamms jeweils einen Abstand (A_{EE}) aufweisen,
weiterhin der Abstand (A_{EG}) größer oder gleich dem Abstand (A_{EE}) ist sowie der jeweilige Nadelkamm die isolierende Kapselung oder die Umhüllung durchdringend und das Behandlungsgut (3) durchstoßend angeordnet oder durchstoßend bewegt wird sowie bei dem in einem flexiblen Darm befindlichem Behandlungsgut (3) die jeweilige Elektrodengruppe im Zipfelbereich des Darmes eingestochen und ein Durchstich erzeugt wird, wobei hierfür das Behandlungsgut (3) im Abstandsraum zwischen den zwei Transportbändern (1; 2) aufgenommen wird und sich die Einzelelektroden (5) von mindestens einem der Transportbänder (1) in Richtung des gegenüberliegenden Transportbandes (2) erstrecken.

3. Verfahren nach Anspruch 1 oder 2,
**dadurch gekennzeichnet, dass**
nach dem Entfernen der jeweiligen Elektroden oder der Elektrodengruppe aus dem Behandlungsgut die verbleibenden Ein- und Durchtrittsstellen verschlossen werden.

4. Verfahren nach Anspruch 3,
**dadurch gekennzeichnet, dass**
das Verschließen durch Besprühen, Verkleben, Bestreichen oder Umhüllen erfolgt.

5. Verfahren nach Anspruch 3,
**dadurch gekennzeichnet, dass**
zum Verschließen rückstreckende, selbstheilende Folienmaterialien eingesetzt werden oder das Darmmaterial selbst mindestens Abschnitte aus einem rückstreckenden, selbstheilenden Material aufweist.

6. Verfahren nach einem der vorangegangenen Ansprüche,
**dadurch gekennzeichnet, dass**
die Stromquelle hochfrequente Energie mit einer Frequenz > 16 kHz bereitstellt, wobei die Ohm'sche Erhitzung mindestens bis zum Koagulieren des jeweiligen Lebensmittels ausgeführt wird.

7. Verfahren nach einem der vorangegangenen Ansprüche,
**dadurch gekennzeichnet, dass**
mindestens in Randbereichen des Behandlungsgutes eine Nachbehandlung mittels konventioneller Hitzebehandlung, insbesondere infraroter Strahlung, erfolgt.

8. Verfahren nach einem der vorangegangenen Ansprüche,
**dadurch gekennzeichnet, dass**
die Einzelelektroden (5) um ihre Achse beweglich oder drehbar sind und während des Durchstoßens eine Rotationsbewegung ausführen, wobei während des Entfernens der Einzelelektroden (5) eine diesbezüglich richtungsgeänderte Rotationsbewegung stattfindet.

9. Verfahren nach einem der vorangegangenen Ansprüche,
**dadurch gekennzeichnet, dass**
die Einzelelektroden (5) als Hohlelektroden ausgebildet sind und der Elektrodenhohlraum ein Temperiermittel bzw. Kühlmittel aufnimmt oder ein solches Mittel führt.

10. Verfahren nach einem der vorangegangenen Ansprüche,
**dadurch gekennzeichnet, dass**
die Einzelelektroden (5) derart eingebracht werden, dass sich mindestens bei einer Einzelelektrode eine Gitterelektrode bildet.

11. Verfahren nach einem der vorangegangenen Ansprüche,
**dadurch gekennzeichnet, dass**
das Durchdringen oder Durchstoßen ultraschallunterstützt erfolgt.

12. Verfahren nach einem der vorangegangenen Ansprüche,
**dadurch gekennzeichnet, dass**
die Bestromung und Erwärmung stufenweise mit zwischengeschalteten Haltezeiten erfolgt.

13. Verfahren nach einem der vorangegangenen Ansprüche,
**dadurch gekennzeichnet, dass**
mindestens eine der Elektroden (5) einen integrierten Temperatursensor aufweist.

14. Verfahren nach einem der vorangegangenen Ansprüche,
**dadurch gekennzeichnet, dass**
die Elektroden (5) aus einem leitfähigen Kunststoffmaterial bestehen.

15. Verfahren nach einem der vorangegangenen Ansprüche,
**dadurch gekennzeichnet, dass**
die Leitfähigkeit der Elektroden (5) einstellbar ist.

16. Verfahren nach Anspruch 15,
**dadurch gekennzeichnet, dass**
die Leitfähigkeit der Elektroden (5) von Elektrode zu Elektrode unterschiedlich einstellbar ist.

17. Verfahren nach einem der vorangegangenen Ansprüche,
**dadurch gekennzeichnet, dass**
zwischen den jeweiligen Elektroden und dem Behandlungsgut ein bezogen auf das Behandlungsgut formgebender Stoff angeordnet ist, welcher eine Trennschicht zwischen Behandlungsgut und der jeweiligen Elektrode bildet, wobei der die Trennschicht bildende Stoff insbesondere kappenförmig ausgebildet ist und elektrische Eigenschaften aufweist, die derjenigen des Behandlungsgutes entsprechen oder nahekommen.

18. Verfahren nach einem der vorangegangenen Ansprüche,
**dadurch gekennzeichnet, dass**
bei schlachtfrischem Fleisch als Behandlungsgut die Ohm'sche Erhitzung über die beginnende, erhitzungsbedingte Eiweißdenaturierung hinaus fortgeführt wird, mit dem Ziel, ablaufende biochemische Prozesse dauerhaft zu stoppen, insbesondere um qualitätsreduzierende Veränderungen der Muskelfasern zu verhindern.

## Claims

1. Method for treating a foodstuff by means of nonconventional, ohmic heating, for heating raw material contained in a casing, for example in intestines, for the production of foodstuffs such as boiled sausage, hot dogs or similar food products as elongated material to be treated, wherein the respective foodstuff is associated with electrically conductive electrodes that are spaced apart, and the electrodes are connected to a controllable or regulatable high-frequency alternating current source,
**characterised in that**
the electrodes respectively consist of a first and a second electrode, wherein the electrodes have a distance (A_{EG}) between them relative to the material to be treated (3), wherein the respective electrode is arranged so as to penetrate the insulating sheath or the casing and so as to transfix the material to be treated (3) and is moved in a transfixing manner, and, in the case of a material to be treated (3) located in a flexible intestine or in a flexible casing, the respective electrode is inserted into the tip area of the intestine or of the casing and a puncture is produced, in such a manner that the electrodes exit the material to be treated (3) so that entry and exit points are created, wherein the insertion of the electrodes relative to the elongated material to be treated is performed essentially obliquely to perpendicularly to the longitudinal axis of the elongated material to be treated, wherein for this purpose the material to be treated (3) is picked up in the space between two conveyor belts (1; 2), wherein conveying elements that extend from at least one conveyor belt in the direction of the space between the conveyor belts form a separation between the individual materials to be treated and enable a safe transport of the goods over the length of the conveyor belts, wherein the desired ohmic heating takes place over the period of time it takes to travel the length of the transport path, wherein the electrodes (5) of at least one of the conveyor belts (1) extend towards the opposite conveyor belt (2).

2. Method according to claim 1,
**characterised in that**
the electrodes respectively take the form of a plurality of electrodes of a first and a second electrode group, wherein the electrode groups have a distance (A_{EG}) between them relative to the material to be treated (3),
each electrode group has a number of individual electrodes (5) similar to a needle comb, wherein the adjacent individual electrodes (5) of the needle comb respectively have a distance (A_{EE}) between them,
the distance (A_{EG}) is also greater than or equal to the distance (A_{EE}), and the respective needle comb is arranged so as to penetrate the insulating sheath or the casing and so as to transfix the material to be treated (3) and is moved in a transfixing manner, and, in the case of a material to be treated (3) located in a flexible intestine, the respective electrode is inserted into the tip area of the intestine or the casing and a puncture is produced, wherein for this purpose the material to be treated (3) is picked up in the space between two conveyor belts (1; 2), and the individual electrodes (5) of at least one of the conveyor belts (1) extend in the direction of the opposite conveyor belt (2).

3. Method according to claim 1 or 2,
**characterised in that**,
following the removal of the respective electrodes or the electrode group from the material to be treated, the entry and exit points that are left behind are sealed.

4. Method according to claim 3,
**characterised in that**
sealing occurs by spraying, bonding, spreading or covering.

5. Method according to claim 3, **characterised in that**
retractable, self-healing film materials are used for sealing, or the intestinal material itself has at least sections that consist of a retractable, self-healing material.

6. Method according to one of the preceding claims,
**characterised in that**
the power source provides high-frequency energy with a frequency of > 16 kHz, wherein the ohmic heating is carried out at least until the coagulation of the respective foodstuff.

7. Method according to one of the preceding claims,
**characterised in that**
a follow-up treatment is carried out by means of a conventional heat treatment, in particular infrared radiation, at least in the edge areas of the material to be treated.

8. Method according to one of the preceding claims,
**characterised in that**
the individual electrodes (5) are movable or rotatable about their axis and perform a rotational movement during transfixing, wherein a rotational movement with a changed direction takes place during the removal of the individual electrodes (5).

9. Method according to one of the preceding claims,
**characterised in that**
the individual electrodes (5) are designed as hollow electrodes and the electrode cavity accommodates or conducts a temperature control medium or cooling medium.

10. Method according to one of the preceding claims,
**characterised in that**
the individual electrodes (5) are inserted in such a manner that a grid electrode is formed at least for one individual electrode.

11. Method according to one of the preceding claims,
**characterised in that**
the penetration or transfixing is performed with ultrasonic assistance.

12. Method according to one of the preceding claims,
**characterised in that**
energising and heating is carried out in stages with intermediate holding times.

13. Method according to one of the preceding claims,
**characterised in that**
at least one of the electrodes (5) has an integrated temperature sensor.

14. Method according to one of the preceding claims,
**characterised in that**
the electrodes (5) are made of a conductive plastic material.

15. Method according to one of the preceding claims,
**characterised in that**
the conductivity of the electrodes (5) is adjustable.

16. Method according to claim 15,
**characterised in that**
the conductivity of the electrodes (5) can be adjusted differently from electrode to electrode.

17. Method according to one of the preceding claims,
**characterised in that**
a material that shapes the material to be treated is arranged between the respective electrodes and the material to be treated, which forms a separating layer between the material to be treated and the respective electrode, wherein the material forming the separating layer is designed in particular in the shape of a cap and has electrical properties that correspond to or are close to those of the material to be treated.

18. Method according to one of the preceding claims,
**characterised in that**,
in the case of freshly slaughtered meat as the material to be treated, the ohmic heating is continued beyond the initial protein denaturation caused by heating, with the aim of permanently stopping ongoing biochemical processes, in particular to prevent quality-reducing changes in the muscle fibres.

## Revendications

1. Procédé de traitement d'un aliment par chauffage ohmique non conventionnel, destiné à chauffer une matière première se trouvant dans une gaine, par exemple un boyau, pour la production d'aliments tels que des saucisses cuites, des hot-dogs ou des produits alimentaires similaires, sous forme d'élément à traiter allongé, dans lequel l'aliment concerné est mis en contact avec des électrodes conductrices d'électricité espacées et les électrodes sont connectées à une source de courant alternatif haute fréquence réglable ou contrôlable,
**caractérisé en ce que**
les électrodes sont constituées d'une première et d'une deuxième électrodes, dans lequel les électrodes sont espacées d'une certaine distance (A_{EG}) par rapport à l'élément à traiter (3), dans lequel l'électrode est disposée ou déplacée de manière pénétrante à travers la capsule isolante ou la gaine et l'élément à traiter (3) est disposé ou déplacé de manière perforante, et dans le cas d'un élément à traiter (3) placé dans un boyau flexible ou une gaine flexible, l'électrode est percée à l'extrémité du boyau ou de la gaine, en créant ainsi une perforation permettant aux électrodes de ressortir de l'élément à traiter (3) et en créant des points d'entrée et de sortie, dans lequel l'introduction des électrodes par rapport à l'élément à traiter allongé a lieu de manière essentiellement oblique, voire perpendiculaire, à l'axe longitudinal de l'élément à traiter, dans lequel à cet effet, l'élément à traiter (3) est renfermé dans l'espace entre deux bandes transporteuses (1 ; 2), dans lequel des organes d'entraînement, qui s'étendent d'au moins une bande transporteuse dans la direction de l'espace entre les bandes transporteuses, forment une séparation entre les différents éléments à traiter et permettent un transport sûr des marchandises sur toute la longueur des bandes transporteuses, dans lequel le chauffage ohmique souhaité a lieu pendant la durée du trajet de transport, dans lequel les électrodes (5) d'au moins une des bandes transporteuses (1) s'étendent dans la direction de la bande transporteuse opposée (2).

2. Procédé selon la revendication 1,
**caractérisé en ce que**
les électrodes sont respectivement constituées d'un premier et d'un deuxième groupe d'électrodes, dans lequel les groupes d'électrodes présentent une distance (A_{EG}) les uns des autres par rapport à l'objet (3) à traiter,
chaque groupe d'électrodes comporte un certain nombre d'électrodes individuelles (5) semblables à un peigne à aiguilles, dans lequel les électrodes individuelles adjacentes (5) du peigne à aiguilles présentant chacune une distance (A_{EE}),
de plus, la distance (A_{EG}) est supérieure ou égale à la distance (A_{EE}) et le peigne à aiguilles respectif est disposée ou déplacée de manière pénétrante à travers la capsule isolante ou la gaine et l'élément à traiter (3) est disposé ou déplacé de manière perforante, et dans le cas d'un élément à traiter (3) placé dans un boyau flexible ou une gaine flexible, le groupe d'électrodes respectif est percé à l'extrémité du boyau, en créant ainsi une perforation, dans lequel l'élément à traiter (3) est renfermé dans l'espace entre les deux bandes transporteuses (1 ; 2) et les électrodes individuelles (5) d'au moins une des bandes transporteuses (1) s'étendent dans la direction de la bande transporteuse opposée (2).

3. Procédé selon la revendication 1 ou 2,
**caractérisé en ce que**
après avoir retiré les électrodes ou le groupe d'électrodes correspondant du produit à traiter, les points d'entrée et de passage restants sont fermés.

4. Procédé selon la revendication 3,
**caractérisé en ce que**
la fermeture est réalisée par pulvérisation, collage, enduction ou emballage.

5. Procédé selon la revendication 3, **caractérisé en ce que**
des films rétractables et auto-cicatrisants sont utilisés pour l'étanchéité ou que le matériau de boyau lui-même est constitué d'au moins des sections d'un matériau rétractable et auto-cicatrisant.

6. Procédé selon une des revendications précédentes,
**caractérisé en ce que**
la source d'alimentation fournit une énergie haute fréquence > 16 kHz, dans lequel le chauffage ohmique est effectué au moins jusqu'à la coagulation du produit alimentaire concerné.

7. Procédé selon une des revendications précédentes,
**caractérisé en ce que**
au moins dans les zones périphériques de l'élément à traiter, un post-traitement est effectué par traitement thermique conventionnel, notamment par rayonnement infrarouge.

8. Procédé selon une des revendications précédentes,
**caractérisé en ce que**
les électrodes individuelles (5) sont mobiles ou rotatives autour de leur axe et exécutent un mouvement de rotation pendant le perçage, dans lequel, lors du retrait des électrodes individuelles (5), un mouvement de rotation à direction modifiée se produit.

9. Procédé selon une des revendications précédentes,
**caractérisé en ce que**
les électrodes individuelles (5) sont conçues comme des électrodes creuses et que la cavité d'électrode contient un fluide de régulation de température ou de refroidissement est conductrice d'un tel milieu.

10. Procédé selon une des revendications précédentes,
**caractérisé en ce que**
les électrodes individuelles (5) sont insérées de manière à former une électrode de grille au moins sur une électrode individuelle.

11. Procédé selon une des revendications précédentes,
**caractérisé en ce que**
la pénétration ou le perçage est réalisé par ultrasons.

12. Procédé selon une des revendications précédentes,
**caractérisé en ce que**
l'alimentation en courant et le chauffage sont réalisés par étapes, avec des durées de rétention intercalées.

13. Procédé selon une des revendications précédentes,
**caractérisé en ce que**
au moins une des électrodes (5) possède un capteur de température intégré.

14. Procédé selon une des revendications précédentes,
**caractérisé en ce que**
les électrodes (5) sont en matière plastique conductrice.

15. Procédé selon une des revendications précédentes,
**caractérisé en ce que**
la conductivité des électrodes (5) est réglable.

16. Procédé selon la revendication 15,
**caractérisé en ce que**
la conductivité des électrodes (5) est réglable d'une électrode à l'autre.

17. Procédé selon une des revendications précédentes,
**caractérisé en ce que**
une substance de mise en forme est disposée entre les électrodes respectives et le matériau à traiter, qui forme une couche de séparation entre le matériau à traiter et l'électrode respective, dans lequel la substance formant la couche de séparation est notamment en forme de capuchon et présente des propriétés électriques correspondant ou proches de celles du matériau à traiter.

18. Procédé selon une des revendications précédentes,
**caractérisé en ce que**,
dans le cas de viande fraîchement abattue comme matériau à traiter, le chauffage ohmique est poursuivi au-delà de la dénaturation initiale des protéines induite par le chauffage, afin d'arrêter durablement les processus biochimiques en cours, notamment pour prévenir les altérations qualitatives des fibres musculaires.
